# EUROPÄISCHE PATENTSCHRIFT

(11) **EP 0 510 008 B1**
(45) Veröffentlichungstag und Bekanntmachung des Hinweises auf die Patenterteilung: **27.04.1994**
(21) Anmeldenummer: 91900716.1
(22) Anmeldetag: 22.12.1990
(51) Int. Cl.: B23B 51/10

(54) **WERKZEUG ZUR BEARBEITUNG VON BOHRUNGEN**
BORE-FINISHING TOOL
OUTIL POUR L'USINAGE D'ALESAGES

(30) Priorität: 09.01.1990 DE 4000403
(43) Veröffentlichungstag der Anmeldung: 28.10.1992
(73) Patentinhaber: ROBERT BOSCH GMBH, 70442 Stuttgart (DE)
(72) Erfinder: SCHMIDT, Hermann, D-7410 Reutlingen 24 (DE); AULICH, Dieter, D-7413 Gomaringen (DE); ESSIG, Peter, D-7410 Reutlingen 1 (DE)
(86) Internationale Anmeldenummer: DE9000986
(87) Internationale Veröffentlichungsnummer: WO9110526

(56) Entgegenhaltungen:
- CH-A- 261 657
- DE-A- 3 517 147
- US-A- 1 786 520

## Beschreibung

Die Erfindung geht von einem Werkzeug nach der Gattung des Patentanspruchs 1 aus, siehe US-A-1 786 520. Bei einem anderen solchen Werkzeug sind auf einen massiven Schaft zwei Hülsen angebracht, die in Abstand den Schaft umgeben und in die zwischen Schaft und Hülse an der einander zugewandten Seite her eine Vielzahl von Drähten eingeführt sind, die sich mit ihren Enden an den Hülsen abstützen, bogenförmig gespannt sind und mit einem Schneidmittel beschichtet sind. Dabei liegen die Drähte dicht an dicht, so daß sie den gesamten Umfang um den Schaft ausfüllen und sich nicht in Umfangsrichtung an der Abstützstelle zueinander verschieben können. Eine der Hülsen ist über ein Gewinde relativ zum Schaft achsial verstellbar, so daß die Drähte mehr oder weniger vorgespannt werden können unter mehr oder weniger Ausbauchung vom Schaft weg. Dieses Werkzeug wird zur Bearbeitung in Bohrungen eingebracht und in diesen Bohrungen können dann mit dem Werkzeug z. B. aus einer Querbohrung in die Bohrung überstehende Materialteile bei einer drehenden Arbeitsbewegung abgetragen werden. Das Werkzeug ist wegen der notwendigen, lückenlosen Belegung mit Drähten am Umfang relativ steif und kann nur in einem engen Toleranzbereich Bohrungen mit verschiedenem Durchmesser bearbeiten. Damit ein Aufdrehen bzw. Aufstellen der Drähte vermieden wird, muß das Werkzeug weiterhin mit Drehrichtungswechsel bei der Bearbeitung angetrieben werden. Weiterhin baut das Werkzeug relativ groß, so daß ein unterer Durchmesserbereich der zu bearbeitenden Bohrung nicht unterschritten werden kann. Dieser Durchmesser liegt aus technischen und fertigungstechnischen Gründen bei dem bekannten Werkzeug bei 8 mm. Auswechseln der Drähte im Schadensfalle bzw. nach Abnutzung der Schneidmittelbeschichtung bedingt regelmäßig in nachteiliger Weise ein Auswechseln aller Drähte, selbst wenn ein Teil derselben noch verwendbar wäre.

Solche Werkzeug und auch andere Werkzeuge werden dazu eingesetzt, hochfein und mit engsten Toleranzen zu bearbeitende Bohrungen nachzubehandeln. Vor allen Dingen in den Fällen, in denen in diese Bohrungen noch Querbohrungen einmünden. Bei Werkstücken dieser Art wird nach Fertigstellung einer Längsbohrung, in der z. B. später ein Pumpenkolben einer Kraftstoffeinspritzpumpe gegen sehr hohe Drucke von z. B. 1.000 bar dicht leiten soll und Fertigstellung der in diese Längsbohrung mündenden Querbohrungen die Längsbohrung nach dem Härten des Werkstückes durch Honen feinbearbeitet. Dabei entsteht regelmäßig ein Grat, der in die Querbohrung ragt und dort im Betrieb der Kraftstoffeinspritzpumpe zu Störungen führen würde. Dieser Grat muß beseitigt werden. Dies kann durch ein Entgratwerkzeug, wie sie z.B. durch die DE-OS 3333499 bekannt sind geschehen. Dazu wird durch die Querbohrung von außen ein Entgratwerkzeug eingeführt, das am Übergang zwischen Querbohrung und Längsbohrung durch Anfasung den Grat entfernt. Problematisch ist hierbei noch, daß die Schnittkurve zwischen Querbohrung und Längsbohrung nicht in einer Ebene ist, so daß die Gefahr besteht, daß das Entgratwerkzeug in verschiedenen Umfangbereichen verschiedene Materialberge abträgt und somit ein gewünschter scharfkantiger Übergang von Querbohrung zu Längsbohrung nicht gewährleistet ist. Dieses Entgraten hat auch zur Folge, daß wiederum ein Rest von Grat in die Längsbohrung ragt. Dieser würde bei Einpassen des hochgenau geschliffenen Pumpenkolbens zu einem Klemmen desselben in der längsbohrung führen. Deshalb muß der Restgrat nachträglich noch einmal entfernt werden, ohne daß die Oberfläche der fertig gehonten Längsbohrung darunter leidet. Dieses Entfernen des Restgrates bzw. eines Grates, der in eine Bohrung ragt ganz allgemein kann durch ein Werkzeug gemäß dem oben erwähnten Stand der Technik erfolgen oder aber es werden Rundbürsten verwendet, deren Außenumfang genau auf den Durchmesser der Längsbohrung angepaßt ist und Borsten haben, die aus mit Schleifmittel versetzten Nylondrähten bestehen. Diese Rundbürsten haben einen exakt an den Durchmesser der Längsbohrung angepaßten Durchmesser und müssen bei ihrem Ersteinsatz über eine definierte Länge eingespannt und unter Ausschaltung von Rundlauffehlern ausgerichtet werden. Weiterhin haben die Bürsten in nachteiliger Weise nur eine relativ geringe Standzeit, da die Durchmesserreduzierung aufgrund von Verschleiß nur in sehr engem Bereich möglich ist. Auch kann es zum Anschweißen von Bürstenmaterial an der längsbohrungswandung kommen. Das nachträgliche Reinigen der Längsbohrung bedeutet wiederum einen erhöhten Aufwand. Werden die Rundbürsten unter Einsatz von Schneidöl verwendet, so wird eine solche Ablagerung zwar vermieden aber der Wirkungsgrad der Borsten wegen geringerer Steifigkeit unter sinkender Anpresskraft verringert. Für jeden Bohrungsdurchmesser muß weiterhin eine angepaßte Bürste verwendet werden, so daß in den für die Bearbeitung vorgesehenen Bearbeitungsmaschinen eine Bearbeitung von Werkstücken verschiedener Durchmesser problematisch ist.

### Vorteile der Erfindung

Durch das erfindungsgemäße Werkzeug mit den kennzeichnenden Merkmalen des Patentanspruchs 1 können demgegenüber in vorteilhafter Weise Bohrungen mit verschiedenen großen Durchmessern einfach und genau bearbeitet werden, wobei bei relativ großer Durchmesservariation nahezu konstante Bearbeitungsergebnisse erzielt werden. Ferner läßt sich das Werkzeug auch bei Bohrungsdurchmessern kleiner 8 mm erfolgreich einsetzen. Mit einem einmal eingespannten Werkzeug können somit Werkstücke mit Bohrungen von verschiedenen Durchmessern bearbeitet werden. Das Werkzeug hat eine hohe Standzeit und es können die mit Schneidmittel beschichteten Drähte in einfacher Weise schnell ausgewechselt werden. Die Zahl der zu Bestückung eines Werkzeugs notwendigen beschichteten Drähte ist relativ gering. Es ergibt sich somit eine einfache kostengünstige Lagerhaltung für die Verschleißteile des Werkzeuges mit geringen Reparaturzeiten. Die Drähte werden in den Schlitzen sicher gehalten und sind mit ihrer Vorspannung bzw. Auswölbung zur Anpassung an verschiedene Bohrungsdurchmesser in einfacher Weise genau einstellbar. Da die Beschichtung der Drähte aus einem ähnlichen bzw. gleichen Material besteht, wie die der Honleisten der Honwerkzeuge wird die vor dem Schlußentgraten erzielte hohe Bearbeitungsgüte der Längsbohrung beibehalten. Die Bearbeitungsdauer ist wegen des gezielten genauen Anliegen der Drähte an der Oberfläche der Bohrung im Vergleich zur Bearbeitung mit Bürsten gering. Das Werkzeug kann sowohl unter Verwendung von Schneidöl als auch trocken eingesetzt werden. Aufgrund der Flexibilität der elastischen Drähte können ferner auch konische, im Längsschnitt eliptische oder abgesetzte Bohrungen bearbeitet werden.

Vorteilhafte Ausgestaltungen der Erfindung sind in den Unteransprüchen angegeben und werden in der nachfolgenden Beschreibung näher erläutert. Durch die Ausgestaltung nach Anspruch 4 wird in vorteilhafter Weise eine nahezu konstante Anpreßkraft der Drähte an die Wand der Bohrung erzielt, da der Anschlag gegen die Druckfeder verschiebbar ist und die Druckfeder im wesentlichen die radiale Kraftkomponente auf die Bohrungswand bestimmt. Diese Anpreßkraft kann ferner über die Federkonstante bei der Auswahl der Druckfeder individuell variiert werden.

Durch die Ausgestaltung nach Anspruch 5 wird erreicht, daß bei einer Verstellung des Stiftes, an den sich die Drähte abstützen über den Schraubbolzen eine Drehbewegung auf den Stift übertragen wird und somit auch die Enden der Drähte in den Schlitzen nicht verspannt werden können, sondern weiterhin frei beweglich bleiben. Die Ausgestaltung nach Anspruch 6 stellt sicher, daß die Schlitze nicht durch ein Eintauchen des Stiftes in den Bereich der Schlitze verschlossen werden und somit die Enden der Drähte leicht eingeführt werden können.

Durch die Ausgestaltung nach Anspruch 10 wird erreicht, daß die Schlitze durch die Bewegung der Drähte beim Ein- und Ausführen des Werkzeugs so wenig wie möglich verschlissen werden, so daß lange eine einwandfreie Führung der Drähte gewährleistet ist. Weiterhin kann damit auch erreicht werden, daß die Eintrittskante der zu bearbeitenden Bohrung nicht beim Einführvorgang einen stärkeren Abtrag erfährt. Bis zum Erreichen der endgültigen, der Bohrung angepaßten Form der Drähte gleiten diese mit ihrem unbeschichteten Teil an der Öffnung der Bohrung vorbei. Erst im Endzustand legen sich die beschichteten Teile der Drähte an die Bohrungswandung an.

### Zeichnung

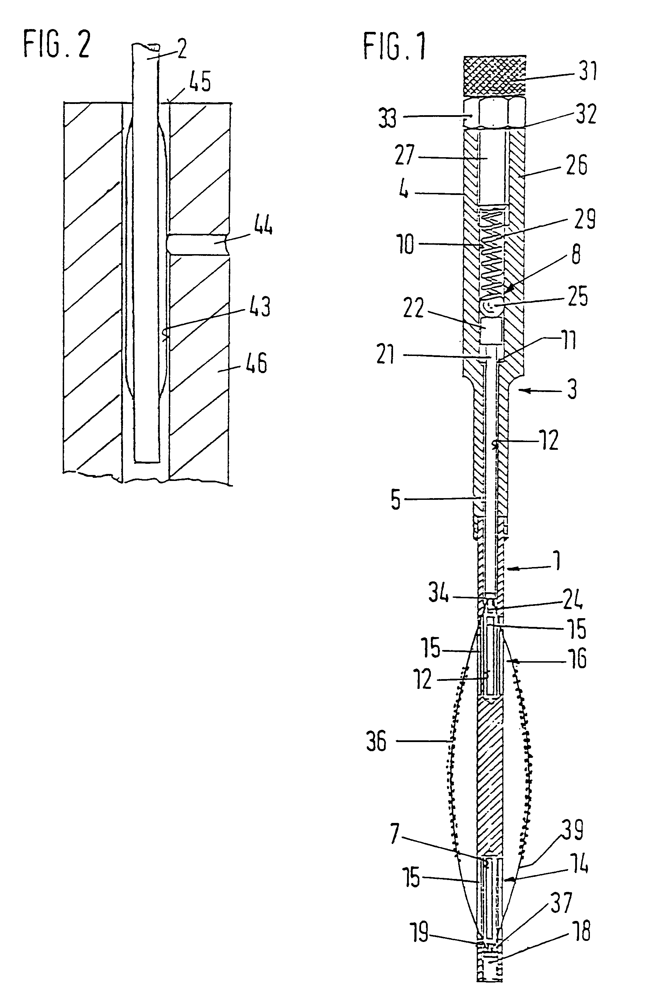

Ein Ausführungsbeispiel der Erfindung ist in der Zeichnung dargestellt und wird im folgenden näher beschrieben. Es zeigen Figur 1 das erfindungsgemäße Werkzeug im Schnitt und Figur 2 das Werkzeug im Einsatz innerhalb der zu bearbeitenden Bohrung.

### Beschreibung

Das im Längsschnitt in Figur 1 gezeigte Werkzeug zur Bearbeitung von Bohrungen weist einen Schaft 1 auf, der hier als unterteilter Schaft ausgebildet ist mit einem werkstückseitigen vorderen Schaftteil 2 mit konstantem Außendurchmesser, welches Schaftteil in ein zweites Schaftteil 3 stirnseitig eingesetzt ist. Das Schaftteil 3 weist einen Aufnahmeschaft 4 auf, über das es in ein hier nicht weiter gezeigtes Futter eines Antriebselementes eingesetzt werden kann. Der Aufnahmeschaft 4 geht über in ein Zwischenstück 5 mit geringerem Durchmesser, in das, wie erwähnt, das Schaftteil 2 stirnseitig eingesetzt ist.

Der Schaft weist zum einen eine erste Sackbohrung 7 auf, die koachsial zur Achse des Schaftteils 2 von dessen werkstückseitiger Stirnseite eingebracht ist. Weiterhin weist der Schaft eine zweite koachsiale Sackbohrung 8 auf, die als Stufenbohrung ausgebildet ist mit einem im Bereich des Aufnahmeschafts befindlichen Stufenbohrungsteil 10 mit größerem Durchmesser der unter Bildung einer Schulter 11 in ein Stufenbohrungsteil 12 mit kleinerem Durchmesser übergeht, welcher Stufenbohrungsteil im Bereich des Zwischenstücks 5 und daran anschließend im Schaftteil 2 verläuft.

Am Schaftteil 2 ist ein erster Bereich 14 vorgesehen, in dem achsparallele Schlitze 15 am Umfang des Schaftteils 2 gleichmäßig verteilt eingebracht sind, die über ihre gesamte Länge in die erste Sackbohrung 7 mündet. Ferner ist am Schaftteil 2 im achsialen Abstand vom ersten Bereich 14 ein zweiter Bereich 16 vorgesehen, in dem ebenfalls am Umfang verteilte Schlitze 15 vorgesehen sind, die achsial begrenzt und über ihrer gesamtenLänge in den Stufenbohrungsteil 12 mit geringerem Durchmesser innerhalb des Schaftteils 2 münden. Vorteilhaft ist die Zahl der Schlitze ein ganzzähliges Vielfaches, so daß sich immer zwei diametral gegenüberliegen, was die Herstellung vereinfacht.Die erste Sackbohrung 7 ist stirnseitig durch einen Stopfen oder ein Schraubteil 18 verschlossen, der bis kurz vor den Anfang der Schlitze reicht und dort stirnseitig mit einem Zapfen 19 versehen ist. Der Stopfen 18 ist im vorgesehenen Ausführungsbeispiel fest mit dem Schaftteil 2 verbunden.

In die zweite Sackbohrung 8 ist ein Stift 21 eingeführt, der zum Aufnahmeschaft hin einen Kopf 22 aufweist, der innerhalb des Stufenbohrungsteils 10 mit größerem Durchmesser gleitet und zur Anlage an die Schulter 11 bringbar ist. In dieser Stellung befindet sich das Ende des Stiftes 21 kurz vor dem aufnahmeschaftseitigen Anfang der Schlitze 15, so daß diese nicht durch den Stift 21 verschlossen werden können. Stirnseitig weist auch der Stift 21 einen Zapfen 24 auf. An den Kopf 22 des Stiftes liegt eine gehärtete Kugel 25 an zwischen der und einen in ein Innengewinde 26 des Stufenbohrungsteil 10 eingeschraubten Gewindebolzen 27 eine Druckfeder 29 eingespannt ist. Der Gewindebolzen weist am aus dem Stufenbohrungsteil 10 stirnseitig nach außen ragenden Ende einen gerändelten Kopf 31 auf, mit dessen Hilfe der Gewindebolzen aus- und einschraubbar ist und der den Außendurchmesser des Aufnahmeschafts nicht überschreitet. Zwischen dem gerändelten Kopf 31 und der Stirnseite 32 des Aufnahmeschafts ist eine Kontermutter 33 auf den Schraubbolzen aufgeschraubt zur Fixierung seiner Drehstellung bzw. Einschraubtiefe. Hier sind auch andere Sicherungsmöglichkeiten gegeben. Die Kugel 25 verhindert, daß beim Verstellen des Gewindebolzen 27 die Drehbewegung nicht auf den Stift 21 übertragen wird, was sonst zu einem Verklemmen der Drähte in den Schlitzen führen könnte.

Zwischen dem Zapfen 24 am Stift 21 und dessen Außenumfang wird als Abstützfläche eine Ringschulter 34 gebildet, die vorzugsweise aus verschleißarmem, gehärtetem Material besteht und an der durch die Schlitze 15 eingeführte Enden von federnden Drähten 36 zur Anlage kommen. Der Stift 21 dient dabei mit seiner Ringschulter 34 als Abstützelement auf der einen Seite dieser Drähte. Auf der anderen Seite sind die Drähte 36 durch die Schlitze 15 des ersten Bereiches 14 geführt und kommen dort an einer vorzugsweise ebenfalls aus gehärtetem Material bestehenden Ringschulter 37 zwischen Zapfen 19 und Stopfen 19 zur Anlage. Diese Ringschulter zusammen mit dem Zapfen 18 bildet ein zweites Abstützelement. Da der Abstand zwischen Ringschulter 34 und Ringschulter 37 geringer ist als die Länge der Drähte, werden diese nach außen von dem Schaft 2 weggewölbt und haben im Ausgangszustand eine bogenförmige Gestalt. Die Drähte sind zumindest im Bereich ihrer Einführung durch die Schlitze 15 blank. Die Breite der Schlitze ist auf den Durchmesser der Drähte angepaßt, so daß diese exakt achsial ausgerichtet geführt werden. Dadurch daß der Zapfen 24 bzw. 19 vorgesehen ist, wird ferner vermieden, daß sich die Enden der Drähte überkreuzen, sondern einen definierten Anlagepunkt in unmittelbarer Nähe am Zapfen haben. Außerhalb der Schlitze sind die Drähte beschichtet, und zwar mit einem Schneidmittel, das vorzugsweise in einem Bindemittel eingebettete Diamantkörner aufweist in ähnlicher Weise wie bei Schneidmitteln für Honleisten. Genauso gut können auch andere auch bei Honleisten verwendete Schneidmittel hier als Beschichtung Anwendung finden. Die Beschichtung 38 auf den Drähten erstreckt sich vorzugsweise nur in einem mittleren Bereich symmetrisch zur Mittelebene des Bogen, den die Drähte im Ausgangszustand beschreiben. Damit ergibt sich ein unbeschichteter Einführbereich 39, der zum Ende des Schaftteils 2 hin angeordnet ist. Zur Bereitstellung dieses Einführbereiches würde es auch genügen, wenn die Drähte nicht symmetrisch, sondern einseitig beschichtet sind, doch ist es für die Montage einfacher und sicherer, wenn beim Einbau der Drähte nicht auf eine bestimmte Einbaulage geachtet werden muß.

Die Ausbauchung der Drähte 36 kann dadurch variiert werden, daß durch mehr oder weniger weites Einschrauben des Schraubbolzens 27 die Lage der Abstützelemente zueinander verändert wird.

Dementsprechend bauchen sich die Drähte mehr oder weniger weit aus. Dabei kann das Werkzeug auf verschiedene Durchmesser von zu bearbeitenden Bohrungen angepaßt werden. In Figur 2 ist das Werkzeug im Einsatz dargestellt. Dabei wurde durch den Vorschub des Antriebselements der Schaftteil 2 in eine Längsbohrung 43 eingeführt, die zuvor z. B. durch Fertighonen fein bearbeitet worden ist. In diese Längsbohrung 43 mündet eine Querbohrung 44, deren Eintrittskante in die Längsbohrung 43 zuvor z. B. durch ein Entgratwerkzeug bearbeitet wurde, oder allgemein die an ihrer Eintrittskante in die Längsbohrung 43 einen in diese Längsbohrung ragenden Grad aufweist. Beim Einführen des Werkzeugs mit dem Schaftteil 3 gleiten die Drähte an der Eintrittskante 45 der Längsbohrung mit ihren Einführbereichen 39 in die Bohrung und verformen sich dabei so, daß sie dann die in Figur 2 gezeigte Gestalt annehmen. Hierbei liegen die Drähte mit ihrem beschichteten Teil achsparallel entlang von Mantellinien der Längsbohrung 43 an der Bohrungswand an. Dadurch, daß die Drähte sich zusammen mit dem Stift 21 gegen die Kraft der Feder 29 in Längsrichtung verschieben können, ist gewährleistet, daß eine gleichmäßige Anpreßkraft der Drähte an die Wandung der Längsbohrung 43 auftritt. Bei der dem Vorhub folgenden Arbeitsbewegung des Werkzeugs, die z. B. auch rotierend in nur einer Richtung sein kann, die aber auch in Anpassung an die Arbeitsbewegung von Honwerkzeugen ausgeführt werden kann, wird durch die Beschichtung der Drähte der Grat am Übergang von Querbohrung 44 zur Längsbohrung 43 abgetragen, ohne daß die Oberflächengüte der Längsbohrung negativ beeinflußt wird. Um eine Anpreßkraft der Drähte innerhalb der Längsbohrung zu erzielen, ist es notwendig, daß der Außendurchmesser der Drähte 36 im in Figur 1 gezeigten Zustand größer ist als der Durchmesser der Längsbohrung 43. Vorzugsweise beträgt der Unterschied das 1,8fache. Hiermit wird eine optimale Länge der Drähte in der Längsbohrung zur Anlage gebracht. Nach Bearbeitung der Längsbohrung 43 des Werkstücks 46 wird das Werkzeug wieder ausgefahren.

Das Werkzeug kann bei einer Mehrspindelhonmaschine eingesetzt werden, in der die Werkstücke automatisch zugeführt werden. Dabei können auch Werkstücke mit Längsbohrungen unterschiedlicher Durchmesserwerte bearbeitet werden. Durch Verstellung der Einspannlänge zwischen den Schulter 34 und 37 können neben der allgemeinen Durchmessertoleranz bei den Bohrungen auch Bohrungen mit größerer Durchmesserabweichung, z. B. im Rahmen von 6 bis 9 mm bearbeitet werden.

Alternativ zur beschriebenen Ausführungsform könnte die Einspannlänge der Drähte auch von der Stirnseite des Schaftteils 2 her variiert werden, wenn von dieser Seite ein Einstellstift vorgesehen wird. Auch die Einstellung bei der in Figur 1 gezeigten Ausführungsform könnte statt über einen Schraubbolzen mit einem anders ausgestalteten Verstellteil durchgeführt werden. Hierbei ist es vorteilhaft, die Verstellung an die für Honahlen vorgesehene Verstellung der Honleisten anzupassen.

Mit dem beschriebenen Werkzeug bietet sich eine Vielzahl von Bearbeitungsmöglichkeiten, wobei nicht nur zylindrische, sondern auch anders geformte Bohrungen bearbeitet werden können, da sich die Drähte entsprechend der Oberfläche anpassen. Ist das Ende der Standzeit erreicht, können die Drähte in einfacher Weise dem Werkzeug entnommen werden. Dabei verhindert die Anlage des Kopfes 22 an der Schulter 11, daß die Schlitze 15 durch den Stift 21 verdeckt werden und die Einführung neuer Drähte erschwert wird. Vorteilhafterweise können auch nur einzelne stärker abgenutzte Drähte ersetzt werden, die einzeln wegen der vorgegebenen Umfangsverteilung leicht austauschbar sind.

## Patentansprüche

1. Werkzeug zur Bearbeitung von Bohrungen mit einem Schaft (1), der in ein Antriebselement einspannbar ist, das zur Durchführung eines Vorhubes des Werkzeuges in eine Arbeitsstellung innerhalb der Bohrung, eines Rückhubes sowie einer zumindest rotierenden Arbeitsbewegung des Werkzeugs dient, mit am einen Ende des Schaftes zwischen zwei Abstützelementen (18, 21) am Schaft eingespannten, sich bogenförmig vom Schaft wegwölbenden, federnden, mit Schneidmittel beschichteten Drähten (36), wobei das eine der Abstützelemente (21) achsial relativ zum Schaft verstellbar ist, dadurch gekennzeichnet, daß der Schaft (1,2) in zwei achsial voneinander versetzten Bereichen (14, 16) am Umfang verteilte, achsial ausgerichtete Schlitze (15) sowie eine von beiden Enden des Schaftes ausgehende achsiale Bohrung, vorzugsweise zwei Sackbohrungen (7, 8) aufweist, die sich beide in die Bereiche (14, 16) erstrecken und in die Anschläge (18, 21) als die Abstützelemente eingesetzt sind, die jeweils in der Bohrung vor deren Eintritt in den Bereich der Schlitze enden und an denen mit ihren Enden die durch die Schlitze (15) in die Bohrung (7, 8) eingeführten Drähte (36) zur Anlage kommen.

2. Werkzeug nach Anspruch 1, dadurch gekennzeichnet, daß einer der Anschläge als von außen verstellbarer Stift (21) ausgeführt ist.

3. Werkzeug nach Anspruch 2, dadurch gekennzeichnet, daß der Stift (21) durch einen von der einen Stirnseite des Schaftes einbringbaren Bolzen (27) verstellbar ist.

4. Werkzeug nach Anspruch 3, dadurch gekennzeichnet, daß zwischen dem Bolzen (27) und dem Stift (21) eine Druckfeder (29) eingespannt ist und der Bolzen bis zur Anlage an einen Anschlag (32) in Richtung Feder verstellbar ist.

5. Werkzeug nach Anspruch 3 oder 4, dadurch gekennzeichnet, daß der Bolzen als Schraubbolzen (27) ausgebildet ist und sich die Druckfeder (29) am Stift (21) und/oder Schraubbolzen (27) über eine gehärtete Kugel (25) abstützt.

6. Werkzeug nach Anspruch 5, dadurch gekennzeichnet, daß der Stift (21) zur Seite der Feder (29) einen Kopf (22) hat, der in einem im Durchmesser weiteren Teil der Sackbohrung (8) gleitet und der Verstellweg des Stiftes in Richtung zu den Drähten (36) durch Anlage des Kopfes (22) an der am Übergang des im Durchmesser weiteren Teiles (10) der Sackbohrung zu einem anschließenden im Durchmesser kleineren Teil (12) der Sackbohrung gebildeten Schulter (11) begrenzt ist.

7. Werkzeug nach einem der Ansprüche 3 bis 6, dadurch gekennzeichnet, daß der Schraubbolzen (27) mit einem außenliegenden gerändelten Kopf (31) versehen ist und ein Sicherungselement (33) zur Sicherung der Drehstellung des Schraubbolzens aufweist.

8. Werkzeug nach Anspruch 7, dadurch gekennzeichnet, daß das Sicherungselement eine Kontermutter (33) ist.

9. Werkzeug nach einem der vorstehenden Ansprüche 2 bis 7, dadurch gekennzeichnet, daß die Anschläge (24, 18) auf der den Drähten (36) zugewandten Seite einen Zapfen (24, 19) aufweisen und die Enden der Drähte an der zwischen Zapfen (24, 19) und dem Anschlag gebildeten Schulter (34, 37) zur Anlage kommen.

10. Werkzeug nach einem der vorstehenden Ansprüche, dadurch gekennzeichnet, daß die Beschichtung mit Schneidmittel der Drähte (36) im mittleren Bereich höchstens jedoch bis kurz vor dem Eintritt der Drähte in die Schlitze (15) vorgesehen ist.

11. Werkzeug nach einem der vorstehenden Ansprüche, dadurch gekennzeichnet, daß als Schneidmittel in Trägermaterial eingebettete Diamantkörner vorgesehen sind.

## Claims

1. Tool for machining bores, which comprises a stem (1) clampable in a drive element serving to make a preliminary stroke of the tool into a working position inside the bore, a return stroke and at least a rotary working movement of the tool, and also comprises resilient wires (36) which at one end of the stem are clamped thereon between two supporting elements (18, 21) and arch in a curve away from the stem and which are coated with cutting medium, one of said supporting elements (21) being axially adjustable relative to the stem, characterized in that the stem (1, 2) has axially aligned slots (15) distributed over the periphery in two regions (14, 16) axially offset relative to one another and also an axial bore starting from both ends of the stem, preferably two blind bores (7, 8), both of which extend into the regions (14, 16) and in which stops (18, 21) are inserted as the supporting elements, each of said stops ending in the bore before they enter the region of the slots, against which stops the ends of the wires (36) inserted through the slots (15) into the bore (7, 8) come to bear.

2. Tool according to Claim 1, characterized in that one of the stops is in the form of an externally adjustable pin (21).

3. Tool according to Claim 2, characterized in that the pin (21) is adjustable by means of a bolt (27) insertable from one end face of the stem.

4. Tool according to Claim 3, characterized in that a compression spring (29) is clamped between the bolt (27) and the pin (21) and the bolt can be adjusted in the direction of the spring until it bears against a stop (32).

5. Tool according to Claim 3 or 4, characterized in that the bolt is in the form of a threaded bolt (27) and the compression spring (29) is supported against the pin (21) and/or the threaded bolt (27) by means of a hardened ball (25).

6. Tool according to Claim 5, characterized in that at the end facing the spring (29) the pin (21) has a head (22) which slides in a part of the blind bore (8) where the diameter of the latter is wider, and the adjustment path of the pin is limited in the direction of the wires (36) through the fact that the head (22) bears against the shoulder (11) formed at the transition from the part (10) of wider diameter of the blind bore to an adjoining part (12) of smaller diameter of the blind bore.

7. Tool according to one of Claims 3 to 6, characterized in that the threaded bolt (27) is provided with an external knurled head (31) and has a locking element (33) for locking the threaded bolt in the position to which it has been turned.

8. Tool according to Claim 7, characterized in that the locking element is a locknut (33).

9. Tool according to one of the preceding Claims 2 to 7, characterized in that the stops (24, 18) are provided at the end facing the wires (36) with a stud (24, 19) and the ends of the wires come to bear against the shoulder (34, 37) formed between the stud (24, 29) and the stop.

10. Tool according to one of the preceding claims, characterized in that the cutting medium coating of the wires (36) is provided in the middle region but at most as far as shortly before the entry of the wires into the slots (15).

11. Tool according to one of the preceding claims, characterized in that diamond grains embedded in carrier material are provided as cutting medium.

## Revendications

1. Outil pour usiner des alésages avec une tige (1), qui peut être serrée dans un élément d'entraînement, qui sert à la réalisation d'un avancement avant de l'outil dans une position de travail à l'intérieur de l'alésage, d'un avancement en arrière ainsi que d'un mouvement de travail au moins rotatif de l'outil, avec des fils insérés entre deux éléments d'appui (18, 21) sur la tige, qui se gonflent en s'écartant en forme d'arc de la tige, de façon élastique, garnis de moyens coupants (36), outil dans lequel l'un des éléments d'appui (21) peut être réglé axialement par rapport à la tige, outil caractérisé en ce que la tige (1, 2) présente dans deux zones décalées axialement l'une par rapport à l'autre (14, 16) des fentes réparties sur le pourtour, orientées axialement (15) ainsi qu'un alésage axial partant des deux extrémités de la tige, de préférence deux trous borgnes (7, 8),qui s'étendent tous les deux dans les zones (14, 16) et sont montés sur les butées (18, 21) comme les éléments d'appui, qui se terminent respectivement dans l'alésage avant son entrée dans la zone des fentes et sur lesquelles viennent en appui par leurs extrémités les fils (36) introduits à travers les fentes (15) dans l'alésage (7, 8).

2. Outil selon la revendication 1, caractérisé en ce que l'une des butées est réalisée sous la forme de la tige (21) qui peut être réglée de l'extérieur.

3. Outil selon la revendication 3, caractérisé en ce que la tige (21) peut être réglée par un boulon (27) qui peut être introduit par l'un des côtés frontaux de la tige.

4. Outil selon la revendication 3, caractérisé en ce qu'entre le boulon (27) et la tige (21) est inséré un ressort de compression (29) et que le boulon peut être réglé jusqu'à ce qu'il vienne en appui sur une butée (32) en direction du ressort.

5. Outil selon la revendication 3 ou 4, caractérisé en ce que le boulon est constitué sous la forme d'un boulon fileté (27) et en ce que le ressort de compression (29) s'appuie sur la tige (21) et/ou le boulon fileté (27) par l'intermédiaire d'une bille trempée (25).

6. Outil selon la revendication 5, caractérisé en ce que la tige (21) a du côté du ressort (29) une tête (22), qui glisse dans une autre partie du trou borgne (8) selon son diamètre et en ce que le trajet de réglage de la tige est limité en direction des fils (36) par appui de la tête (22) sur l'épaulement (11) formé à la transition de la partie (10) élargie en diamètre du trou borgne vers une partie (12) plus petite en diamètre du trou borgne.

7. Outil selon l'une des revendications 3 à 6, caractérisé en ce que le boulon fileté (27) est pourvu d'un tête (31) molletée située à l'extérieur, et présente un élément de blocage (33) pour bloquer la position de rotation du boulon fileté.

8. Outil selon la revendication 7, caractérisé en ce que l'élément de blocage est un contre-écrou (33).

9. Outil selon l'une des revendications précédentes 2 à 7, caractérisé en ce que les butées (24, 18) présentent sur les côtés tournés vers les fils (36) un pivot (24, 19) et les extrémités des fils viennent en appui sur les épaulements (34, 37) formés entre les pivots (24, 19) et la butée.

10. Outil selon l'une des revendications précédentes, caractérisé en ce que l'on prévoit de revêtir avec des moyens coupants les fils (36) dans la zone moyenne, mais au maximum jusque peu avant l'entrée des fils dans les fentes (15).

11. Outil selon l'une des revendication précédentes, caractérisé en ce que l'on prévoit des grains de diamant noyés dans la matière du support en tant que moyens coupants.
